# DEMANDE DE BREVET EUROPEEN

(11) **EP 0 586 315 A1**
(43) Date de publication de la demande: **09.03.1994**
(21) Numéro de dépôt: 93420351.4
(22) Date de dépôt: 26.08.1993
(51) Int. Cl.: H02J 7/00

(54) **Ensemble pour recharger les batteries d'accumulateurs d'un véhicule automobile électrique**

(30) Priorité: 02.09.1992 FR 9210673
(71) Demandeur: CABLECO, F-69210 Savigny (FR); Poumey, Michel, F-69130 Ecully (FR)
(72) Inventeur: Poumey, Michel, F-69130 Ecully (FR)
(74) Mandataire: Laurent, Michel

(57) **Abrégé**

Ensemble pour recharger les batteries d'accumulateurs d'un véhicule automobile électrique (1), comprenant:
- à poste fixe, un premier boitier diélectrique (10) comprenant un générateur haute fréquence (11) relié d'une part au secteur électrique, et d'autre part aux bornes (15,16) d'au moins un inducteur (17) disposé en façade du boitier (10);
- monté à demeure sur le véhicule (1), un second boitier diélectrique (20) comprenant, sur la face destinée à venir en regard de la façade (18) du premier boitier (10), un capteur (22) couplable magnétiquement dans l'air et à distance à l'inducteur (17), relié par ses deux bornes (23,24) à un redresseur (27) relié à son tour par ses deux bornes de sortie (28) aux batteries (5).

Le capteur et l'inducteur sont constitués chacun d'un bobinage plan disposé contre les parois des deux boitiers (20,21) destinés à venir en regard.

## Description

L'invention concerne un ensemble pour recharger les batteries d'accumulateurs d'un véhicule automobile électrique.

Les véhicules automobiles électriques fonctionnent uniquement grâce à de l'énergie stockée dans des batteries d'accumulateurs d'électricité. L'essentiel de cette énergie est bien entendu utilisé pour alimenter le moteur de traction électrique. Il existe également une autre cause de consommation de l'énergie stockée, à savoir le chauffage, le dégivrage, le désembuage.

La recharge des accumulateurs en électricité demande généralement une durée assez longue de plusieurs heures. La puissance du chargeur doit être dimensionnée en conséquence. Ainsi, un stockage de 12 kwh faisant appel à un chargeur de 3 kw implique une charge d'une durée d'au moins quatre heures.

Comme le chargeur est embarqué dans le véhicule, sa masse qui avoisine les 50 kilogrammes, se surajoute alors à celle des batteries d'accumulateurs. De la sorte, la présence du chargeur grève d'autant le coût de fonctionnement.

Par ailleurs, l'opération de recharge nécessite le branchement sur le secteur d'alimentation électrique, ce qui pose alors des problèmes de sécurité électrique, notamment en atmosphère humide.

Lorsque l'on désire avoir une recharge beaucoup plus rapide, il faut alors faire appel à des chargeurs beaucoup plus puissants qui sont alors beaucoup plus lourds. Par exemple, un chargeur de 48 kW pèse fréquemment de l'ordre de 400 kilogrammes. Cette masse devient très rapidement un handicap, sans compter que le raccordement de ce type de chargeur au secteur pose des problèmes de sécurité importants.

Afin de s'affranchir des difficultés inhérentes à l'embarquement d'un chargeur, on a proposé, par exemple dans le document US-A-4 347 472, de procéder à la charge des batteries d'accumulateurs des véhicules par couplage électro-magnétique dans l'air, c'est à dire en l'absence de tout circuit magnétique, type ferrite, noyau de fer doux, etc....

Dans ce cas, le chargeur proprement dit est constitué par une borne, intégrant un enroulement primaire relié au secteur d'alimentation électrique, et susceptible de générer un champ électro-magnétique haute fréquence. Ce champ est capté par un enroulement secondaire, intégré au véhicule, et relié à un circuit de charge des batteries d'accumulateurs.

Bien que constituant un progrès certain par rapport aux dispositifs traditionnels de charge de batteries, ce système n'est toutefois pas satisfaisant, dans la mesure où les enroulements constitutifs respectivement du générateur du champ électro-magnétique, et du capteur de ce même champ génèrent un encombrement important, et ne permettent pas le transfert par couplage inductif dans l'air d'importantes quantités d'electricité, notamment du fait des pertes importantes dans l'espace séparant ces deux enroulements. Or, compte tenu des impératifs liés à l'encombrement propre aux véhicules, une distance d'au moins dix centimètres est quasi nécessaire entre les deux enroulements, distance pouvant facilement atteindre une vingtaine de centimètres.

L'objet de l'invention est de proposer un ensemble pour recharger les batteries d'accumulateurs de véhicules électriques, répondant à ces impératifs, et susceptible d'assurer un transfert d'électricité à puissance élevée et selon des durées réduites, tout en augmentant les conditions de sécurité lors des périodes de charge.

Cet ensemble pour recharger les batteries d'accumulateurs d'un véhicule automobile électrique, comprend :
- à poste fixe, un premier boitier diélectrique comprenant un générateur haute fréquence relié d'une part au secteur électrique, et d'autre part aux bornes d'au moins un inducteur disposé en façade du boitier ;
- monté à demeure sur le véhicule, un second boitier diélectrique comprenant, sur la face destinée à venir en regard de la façade du premier boitier, un capteur couplable magnétiquement dans l'air et à distance à l'inducteur, relié par ses deux bornes à un redresseur relié à son tour par ses deux bornes de sortie aux batteries.

L'invention se caractérise en ce que l'inducteur et le capteur sont réalisés sous la forme d'un bobinage plan, disposé contre les parois des deux boitiers destinés à venir en regard.

En d'autres termes, l'invention consiste à recharger le véhicule automobile électrique par induction haute fréquence, au moyen de bobinages plans, ce qui élimine alors les problèmes liés à la masse des chargeurs et au branchement sur le secteur électrique d'une part, et permet de délivrer des puissances importantes sans engendrer de pertes trop substantielles lors du couplage dans l'air.

On fait ainsi appel à un ensemble formé de deux boitiers diélectriques distincts, le premier à poste fixe formant alors borne de recharge, le second monté à demeure sur le véhicule, de sorte que lorsque l'on désire recharger le véhicule électrique, il suffit d'approcher le second boitier pour le mettre en regard de la façade du premier boitier comprenant l'inducteur, la distance entre l'inducteur et le capteur étant réduite au minimum. Ainsi, les courants haute fréquence produits par le générateur, parcourent l'inducteur en provoquant un champ électro-magnétique de même fréquence rayonné par l'inducteur. Le capteur situé à quelques centimètres de l'inducteur, est alors couplé magnétiquement dans l'air à celui-ci, et intercepte le champ électro-magnétique émis, ce qui donne naissance à une force électro-motrice induite entre ses deux bornes. Le redresseur placé aux deux bornes du capteur débite dans la batterie un courant continu que l'on filtre avantageusement par un condenseur.

Avantageusement, en pratique :
- un condensateur de filtrage est placé en dérivation entre les bornes de sortie du redresseur ;
- un régulateur de charge est intercalé en série entre la sortie du redresseur et l'entrée des batteries d'accumulateurs ;
- un condensateur est placé en dérivation entre les deux bornes de sortie du capteur, de manière à former un circuit oscillant du type bouchon avec la self-inductance dudit capteur ; ce circuit oscillant présente une fréquence de résonance égale à la fréquence de fonctionnement du générateur ;
- en pratique, une diode zener et un voyant lumineux disposés en série, sont placés alors en dérivation sur le condensateur de filtrage ;
- l'inducteur et le capteur sont réalisés sous la forme d'un bobinage plan en spirale, circulaire ou polygonal, disposé contre les parois des deux boitiers destinés à venir en regard ;
- le générateur haute fréquence est alimenté à partir du secteur électrique, par exemple 50 Hz ou 60 Hz. La fréquence de fonctionnement est de quelques dizaines de kHz,ce qui permet d'utiliser avantageusement des bobinages sans fer ni ferrite pour la fabrication de l'inducteur ou du capteur.

Ainsi, dans l'ensemble de recharge selon l'invention, le véhicule n'est équipé que d'un capteur d'énergie de masse relativement faible, même pratiquement négligeable, ce qui se traduit par une économie de fonctionnement appréciable. Comme par ailleurs, le premier boitier de recharge est complètement fermé et ne comporte aucun câble sortant, on opère ainsi dans des conditions de sécurité électrique optimum. On adapte le voltage de l'ensemble à celui de la batterie électrique grâce au rapport de transformation entre le nombre de tours du bobinage inducteur et celui du bobinage capteur, étant rappelé que c'est le nombre de tours du bobinage capteur qui doit être adapté à la tension de la batterie électrique.

Comme par ailleurs, l'ensemble ne comporte pas de connexion électrique amovible entre le véhicule et la borne, il n'y a pas de possibilités de mauvais contact.

On peut augmenter la puissance du générateur pour assurer une recharge très rapide, sans augmenter la masse à transporter dans le véhicule.

Le transfert d'énergie ayant lieu à distance, le véhicule reste isolé galvaniquement du secteur pendant l'opération de recharge ; on opère donc avec une sécurité optimale, même en atmosphère humide.

En pratique, il n'est pas toujours très facile de faire coÎncider l'inducteur qui est fixe avec le capteur placé sur le véhicule. Pour éviter d'augmenter la distance entre le capteur et l'inducteur et ainsi diminuer l'énergie captée, le premier boitier comprend un seul générateur haute fréquence et une pluralité d'inducteurs raccordés en dérivation sur les bornes de sortie du générateur haute fréquence, chaque inducteur comprenant alors en série un contact de relais de mise en service lors de la coïncidence avec le capteur. De la sorte, lorsque le capteur est positionné en face d'un des inducteurs appropriés, le contact correspondant se ferme, ce qui autorise alors le fonctionnement du générateur. Parallèlement, le voyant de contrôle disposé en série avec la diode zener, s'allume indiquant que la charge est établie. La diode zener autorise l'allumage du voyant que si la force électro-motrice induite est suffisante et supérieure à la tension de la batterie. La fermeture du contact de relai peut être obtenue par tous moyens appropriés, notamment à distance par action d'un aimant permanent situé au centre du bobinage capteur dans le véhicule sur un contact magnétique tel qu'une ampoule reed positionnée au centre de chaque inducteur dans la borne de recharge.

Si le bon positionnement du capteur n'est pas obtenu, le voyant lumineux ne s'allume pas, ce qui oblige le conducteur du véhicule à déplacer celui-ci jusqu'à obtention de l'allumage de ce voyant lumineux. Le second boitier peut être disposé sur le véhicule à tout endroit approprié.

Dans une forme de réalisation avantageuse et pour les mêmes raisons, ce second boitier comprend une pluralité de capteurs associés chacun à un redresseur, les bornes de même nature (plus ou moins) des redresseurs étant alors connectées respectivement entre elles, puis au condensateur de filtrage unique.

Dans une autre forme d'exécution, le second boitier est encastré dans le véhicule et est relié par un câble souple aux bornes d'entrée du redresseur. Lorsque l'on désire recharger, il suffit de sortir ce second boitier pour le dégager de son logement et l'appliquer sur la borne de recharge formant le premier boitier à poste fixe, la solidarisation des deux boitiers étant obtenue par tous moyens connus à fixation rapide, tels que aimants, quarts de tours, etc.. .

La manière dont l'invention peut être réalisée et les avantages qui en découlent ressortiront mieux des exemples de réalisation qui suivent, à l'appui des figures annexées.

La figure 1 représente le schéma électrique de l'ensemble de recharge par induction selon l'invention.

La figure 2 est une représentation schématique sommaire de cet ensemble mis en place sur un véhicule automobile électrique.

Les figures 3 à 6 montrent d'autres formes de l'invention sur un véhicule automobile électrique.

Les figures 7 et 8 montrent une forme d'exécution perfectionnée faisant appel à plusieurs inducteurs dans la borne de recharge.

La figure 9 montre le schéma électrique d'une forme de réalisation formé de plusieurs capteurs pour la recharge d'une même batterie électrique.

Dans les figures, la référence (1) désigne le véhicule électrique dont la coque, ou plus exactement partie de la coque (2), est réalisée en matière plastique. La référence (3) désigne la chaussée et la référence (4) un trottoir. La référence (5) désigne les batteries d'accumulateurs permettant de faire fonctionner le véhicule électrique (1).

Selon l'invention, l'ensemble de recharge comprend essentiellement deux boitiers respectivement (10,20), diélectriques fermés, par exemple en matière plastique, le premier boitier dit de recharge étant destiné à être placé à poste fixe, par exemple sur le trottoir (4). Selon l'invention, ce premier boitier comprend un générateur haute fréquence (11) alimenté par un câble (12) aux bornes (13,14) au secteur, par exemple en 50 Hz ou 60 Hz. Le générateur (11) est d'un type courant, par exemple similaire à ceux utilisés dans le chauffage par induction . Ce générateur est relié aux bornes (15,16) d'un inducteur (17) disposé au voisinage immédiat de la façade (18) du boitier (10). Cet inducteur (17) est formé par une spirale plane analogue à celle utilisée dans les plaques de cuisson à induction. L'enroulement spiralé peut être soit circulaire, soit polygonal.

Selon une autre caractéristique de l'invention, le véhicule automobile (1) comprend un second boitier (20) diélectrique fermé, monté à demeure sur le véhicule (1), et dont l'intérieur de la face externe (21) destinée à venir en regard de la façade (18) du premier boitier (10), comprend un capteur (22) dont le bobinage est analogue à (17). Ces deux bobinages, respectivement inducteur (17) et capteur (21), sont séparés par une distance aussi courte que possible, par exemple de l'ordre seulement de quelques centimètres (jusqu'à vingt centimètres) le capteur (21) est donc couplé magnétiquement dans l'air à l'inducteur (17), qui intercepte le champ électro-magnétique émis par cet inducteur (17), ce qui donne alors naissance à une force électro-motrice. Le capteur (22) est relié par ses deux bornes (23,24) aux deux bornes d'entrée respectivement (25,26) d'un redresseur (27). Les bornes de sortie (28,29) de ce redresseur (27) sont reliées aux batteries d'accumulateurs (5) à recharger. Un condensateur (30) d'accord est placé en dérivation entre les bornes (23,24) du capteur et les bornes d'entrée (25,26) du redresseur (27). Ce condensateur (34) est dimensionné de façon à obtenir la résonance pour la fréquence de fonctionnement du générateur (11). Ce condensateur (34) constitue avec la self-inductance du capteur (22), un circuit oscillant du type "bouchon". Un régulateur de charge (31) est placé en série entre la sortie (28) du redresseur (27) et l'entrée des batteries d'accumulateurs (5).

Un voyant lumineux (32) utilement placé au tableau de bord, en série avec une diode zener (33), est placé en dérivation entre la sortie (28) du redresseur et l'entrée du régulateur (31). Un condensateur de filtrage (34) est monté en parallèle, sur la sortie (28) du redresseur (27).

La force électromotrice induite dans le capteur (22) et redressée par le redresseur (27) procure sur le condensateur de filtrage (34) une tension continue supérieure à celle de la batterie. Un courant de charge s'établit donc des bornes du condensateur (34) vers celles de la batterie (5) et traverse le régulateur de charge. Celui-ci a pour fonction de diminuer, de façon classique, le courant de charge au fur et à mesure que la valeur de la tension batterie augmente et même de l'annuler lorsque la batterie est totalement rechargée.

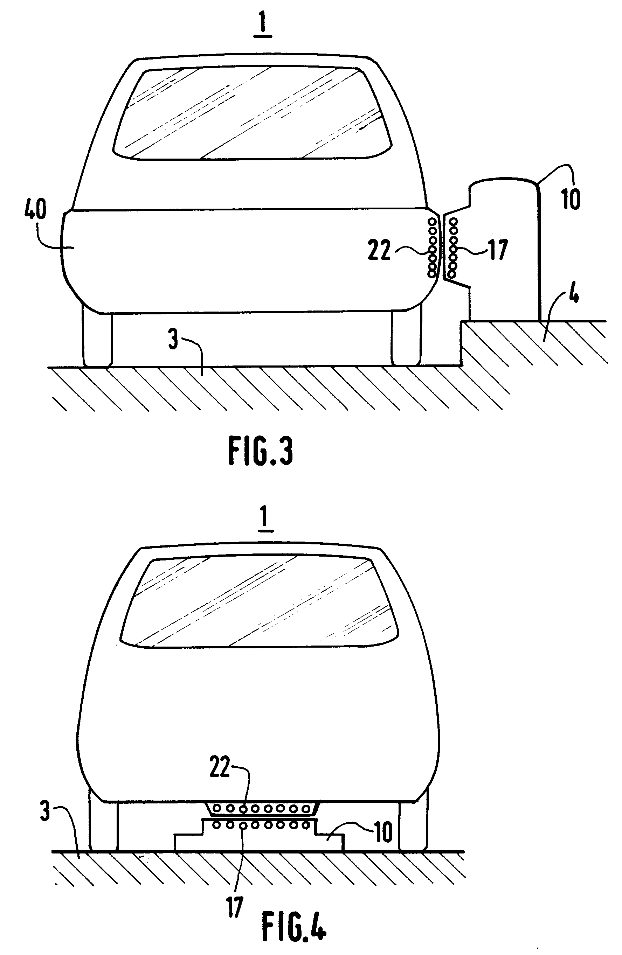

Dans une autre forme d'exécution montrée à la figure 3, le second boitier réalisé par exemple en un matériau souple déformable et isolant, dans lequel est noyé le capteur (22) est monté à demeure sur le véhicule est disposé sur le flanc (40) du véhicule (1) . Il suffit ainsi en profitant de la déformation du flanc (40), de placer en regard et au contact le plus près possible le capteur (22) et l'inducteur (17).

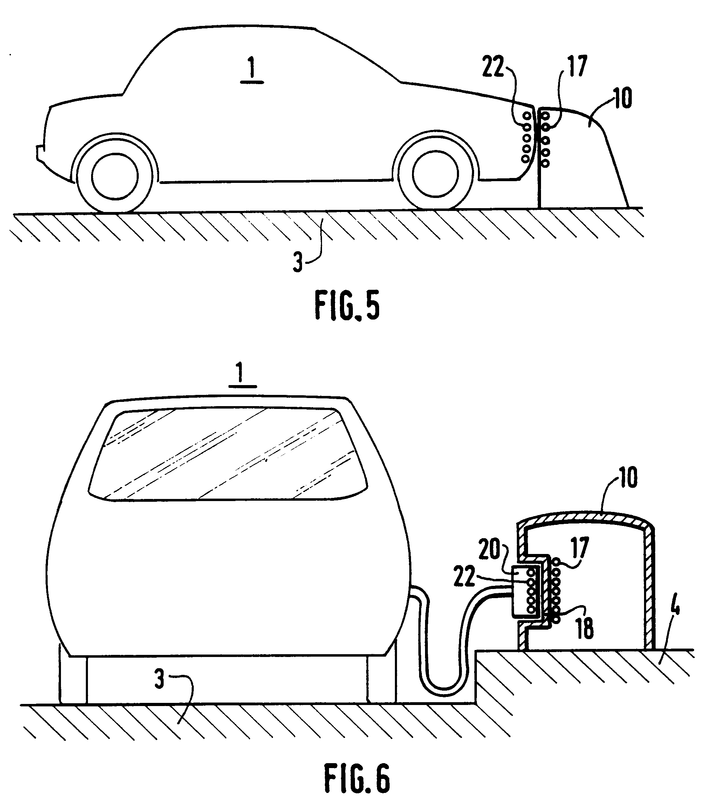

Dans une autre forme de réalisation montrée à la figure 5, le capteur (22) peut être monté à l'avant et autorise alors des chargements en stationnement en épis. Il suffit alors que les véhicules viennent en quasi-butée sur la borne (10) placée à cet effet.

Dans une forme de réalisation montrée à la figure 4, la recharge s'effectue par le dessous du véhicule avec un patin télescopique ou non.

Dans une autre forme d'exécution montrée à la figure 6, la borne de recharge (10) présente un encastrement au voisinage de la paroi (18) duquel est placé l'inducteur caractéristique (17).

Dans une autre forme de réalisation, le boitier (20) comportant le capteur (22) est raccordé par un câble souple à deux conducteurs (41) au véhicule (1). L'ensemble boitier (20)/cordon (41) est placé dans un logement prévu à cet effet dans le véhicule (1). Le cordon (41) est relié au redresseur (27) par tout moyen connu. Lorsque la batterie est à recharger, il suffit d'extraire le boitier (20) du véhicule, de manière à l'encastrer dans le logement prévu à cet effet dans la borne (10) et le fixer par tous moyens appropriés, tels que aimants incorporés, fixation rapide du type quart de tour ou autres. Une fois la charge terminée, le boitier (20) revient se positionner dans le véhicule (1) et le câble (41) de liaison souple rentre dans le logement prévu à cet effet, dont le bouchon est le boitier (20) proprement dit. Cette solution réduit à la fois le coût de la borne de recharge (10) ainsi que le coût du capteur (22).

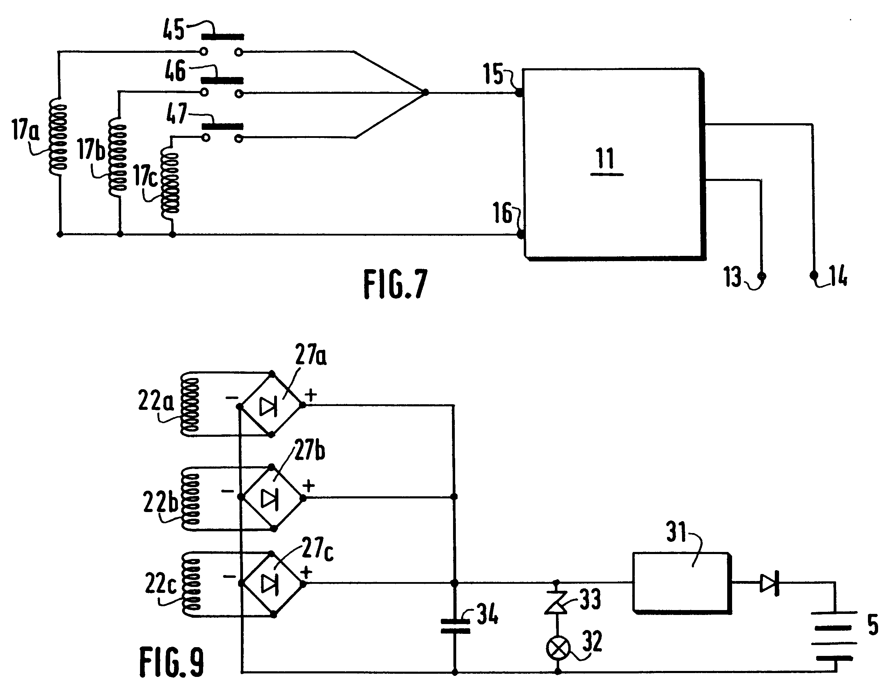

Dans une forme de réalisation pratique montrée aux figures 7 et 8, la borne de recharge (10) comprend un seul générateur (11) et une pluralité d'inducteurs respectivement (17a,17b,17c) en dérivation sur les bornes de sortie (15,16) du générateur (11). Les inducteurs (17a,17b,17c) sont répartis sur la face (18) de la borne de recharge (10). Chaque inducteur comporte en série un contact respectivement (45,46,47) qui permet sa mise en service. Lorsque le capteur (22) du véhicule (1) est positionné en face d'un des inducteurs (17a,17b,17c), le contact correspondant (45,46,47) se ferme, ce qui enclenche alors le générateur (11). Parallèlement, au tableau de bord du véhicule, le voyant (32) s'allume en indiquant ainsi que la charge est établie. La diode zener (33) autorise l'allumage du voyant lumineux (32) seulement si la force électro-motrice induite est suffisante et est supérieure à la tension de la batterie (5). La fermeture du contact de relai correspondant (45-47) peut être obtenue par l'action à distance d'un aimant permanent situé au centre du bobinage du capteur (22) dans le véhicule (1) sur un contact magnétique tel qu'une ampoule reed placée au centre de chaque inducteur (17a,17b,17c) dans la borne de recharge (10). Ainsi, tant que le positionnement du capteur (22) n'est pas satisfaisant, le voyant (32) ne s'allume pas, ce qui oblige alors le conducteur du véhicule (1) à déplacer ce véhicule jusqu'à l'obtention de cet allumage (32).

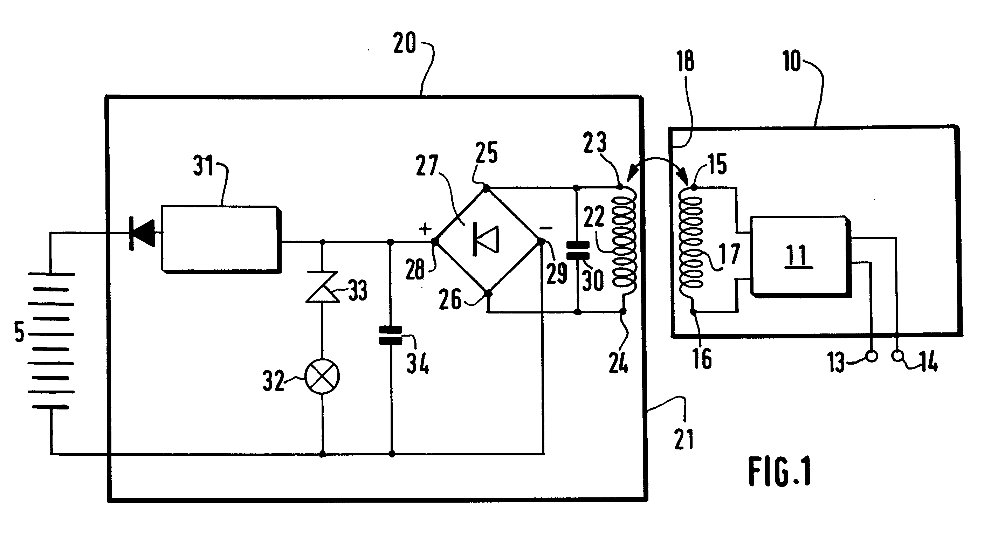

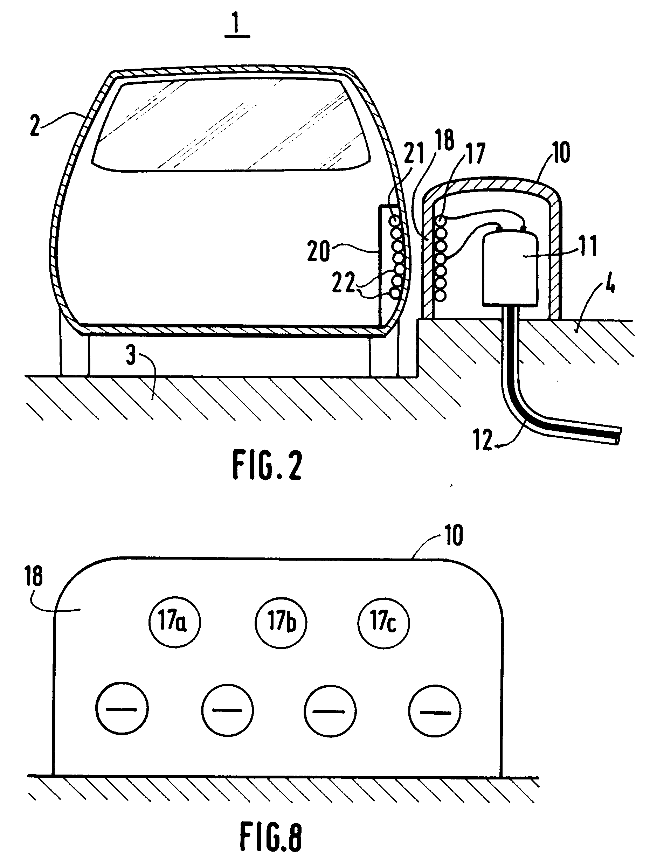

Dans une autre forme d'exécution montrée à la figure 9, le second boitier (20) comprend plusieurs capteurs (22a, 22b,22c) placés par exemple sur les flancs, à l'avant ou sous le dessous du véhicule. Chaque capteur (22a,22b,22c) est associé comme à la figure 1, à un redresseur correspondant (27a,27b,27c), toutes les bornes de même nature étant reliées aux bornes du condensateur de filtrage unique (34). Lorsqu'un des capteurs est en coïncidence avec l'inducteur, une tension continue apparait aux bornes du condensateur de filtrage unique (34). Les redresseurs des autres capteurs non en coïncidence avec l'inducteur interdisent au courant continu, découlant de ladite tension continue produite, de circuler dans lesdits capteurs.

Cet ensemble de recharge conforme à l'invention présente de nombreux avantages par rapport aux solutions commercialisées à ce jour. On peut citer :
- l'allègement considérable du poids du véhicule, notamment dans le cas de charge rapide, puisque celui-ci n'est équipé que du capteur (20) d'énergie dont la masse est très faible ;
- une bonne sécurité lors des recharges, puisque la borne de recharge (10) est fermée et ne présente aucun câble sortant ;
- l'absence de connexions électriques amovibles à établir entre la borne (10) et le véhicule (1,20), ce qui présente une fiabilité parfaite pour le transfert d'énergie de la borne vers le véhicule ;
- la possibilité d'augmenter la puissance du générateur (11) pour assurer une recharge très rapide ;
- le fait que pendant toute l'opération, le véhicule (1) reste isolé galvaniquement du secteur (13,14), ce qui diminue d'autant les dangers électriques, notamment en atmosphère humide.

## Revendications

**1/** Ensemble pour recharger les batteries d'accumulateurs (5) d'un véhicule automobile électrique (1), comprenant :
- à poste fixe, un premier boitier diélectrique (10) comprenant un générateur haute fréquence (11) relié d'une part au secteur d'alimentation électrique, et d'autre part aux bornes (15,16) d'au moins un inducteur (17) disposé en façade du boitier (10) ;
- monté à demeure sur le véhicule (1), un second boitier diélectrique (20) comprenant, sur la face destinée à venir en regard de la façade (18) du premier boitier (10), un capteur (22) couplable magnétiquement dans l'air et à distance à l'inducteur (17), relié par ses deux bornes (23,24) à un redresseur (27), lui-même relié par ses deux bornes de sortie (28) aux batteries (5),
***caractérisé*** en ce que l'inducteur (17) et le capteur (22) sont réalisés sous la forme d'un bobinage plan disposé contre les parois des deux boitiers (20,21) destinés à venir en regard.

**2/** Ensemble pour recharger les batteries d'accumulateurs (5) selon la revendication 1, ***caractérisé*** en ce qu'un condensateur (30) est placé en dérivation entre les deux bornes (23-24) du capteur, de manière à former un circuit oscillant du type bouchon avec la self-inductance dudit capteur (22), la fréquence de résonance de ce circuit bouchon étant égale à la fréquence de fonctionnement du générateur.

**3/** Ensemble pour recharger les batteries d'accumulateurs (5) selon l'une des revendications 1 et 2, ***caractérisé*** en ce qu'un régulateur de charge (31) est intercalé en série entre la sortie du redresseur (27) et l'entrée des batteries d'accumulateurs (5).

**4/** Ensemble pour recharger les batteries d'accumulateurs (5) selon l'une des revendications 1 à 3, ***caractérisé*** en ce qu'un condensateur de filtrage (34) est placé en dérivation entre les bornes de sortie (28) du redresseur.

**5/** Ensemble pour recharger les batteries d'accumulateurs (5) selon la revendication 4, ***caractérisé*** en ce qu'une diode zener (33) et un voyant lumineux (32) disposés en série, sont placés en dérivation entre le condensateur (34) et l'entrée du régulateur (31).

**6/** Ensemble pour recharger les batteries d'accumulateurs (5) selon l'une des revendications 1 à 5, ***caractérisé*** en ce que le premier boitier (20) comprend un seul générateur haute fréquence (11) et une pluralité d'inducteurs (17a,17b,17c) raccordés en dérivation sur les bornes de sortie du générateur haute fréquence, chaque inducteur (17a, 17b,17c) comprenant en série un contact de relai de mise en service lors de la coïncidence avec le capteur (22).

**7/** Ensemble pour recharger les batteries d'accumulateurs selon l'une des revendications 1 à 6, ***caractérisé*** en ce que le second boitier (21) comprend une pluralité de capteurs (22a,22b,22c) associés chacun à un redresseur, les bornes de même nature des redresseurs (27) étant connectées respectivement entre elles et au condensateur de filtrage unique (34).

**8/** Ensemble pour recharger les batteries d'accumulateurs (5) selon l'une des revendications 1 à 6, ***caractérisé*** en ce que le boitier (20) comportant le capteur (22) est raccordé par un câble souple au redresseur (27) et l'ensemble boitier (20)/cordon est placé dans un logement prévu à cet effet dans le véhicule (1).
